# FASCICULE DE BREVET EUROPEEN

(11) **EP 4 059 160 B1**
(45) Date de publication et mention de la délivrance du brevet: **08.01.2025**
(21) Numéro de dépôt: 20819808.5
(22) Date de dépôt: 03.11.2020
(51) Int. Cl.: H04B 10/116

(54) **DISPOSITIF DE COMMUNICATION OPTIQUE SANS FIL**
DRAHTLOSE OPTISCHE KOMMUNIKATIONSVORRICHTUNG
WIRELESS OPTICAL COMMUNICATION DEVICE

(30) Priorité: 14.11.2019 FR 1912700
(43) Date de publication de la demande: 21.09.2022
(73) Titulaire: Oledcomm, 78140 Velizy Villacoublay (FR)
(72) Inventeur: DOMINGUEZ-GONZALEZ, Carlos, 92310 Sèvres (FR); LARTIGUE, Clément, 92140 Clamart (FR); BECHADERGUE, Bastien, 92240 Malakoff (FR); AZOULAY, Benjamin, 75013 Paris (FR)
(74) Mandataire: Bonnet, Michel
(86) Numéro de dépôt international: PCT/FR2020/051985
(87) Numéro de publication internationale: WO 2021/094669

(56) Documents cités:
- WO-A1-2018/086842
- WO-A1-2019/016024
- FR-A1- 3 046 255

## Description

L'invention concerne le domaine de la communication optique sans fil.

### ARRIERE PLAN DE L'INVENTION

On assiste aujourd'hui à un déploiement important de la technologie de la communication optique sans fil (OWC, pour *Optical Wireless Communication*)*.*

Un exemple d'application bidirectionnelle mettant en oeuvre cette technologie est le suivant.

Le LiFi est un sous-ensemble de la technologie OWC permettant l'accès à un réseau sans fil (par exemple Internet) par la lumière. Un point d'accès LiFi (pour *Light Fidelity*) est positionné au plafond d'une pièce. Le point d'accès LiFi est connecté par une fibre optique ou par un câble électrique à un réseau local ou public comme Internet. Le câble électrique est par exemple un câble Ethernet. Le point d'accès LiFi est possiblement alimenté via le câble Ethernet (on parle alors de PoE, pour *Power over Ethernet*).

Un ordinateur (ou tout autre équipement compatible : *smartphone,* tablette, etc.) se trouve dans la pièce. Un *dongle* LiFi est connecté à l'ordinateur (le terme *dongle* est parfois remplacé en français par le terme « sentinelle »). L'ordinateur et le *dongle* LiFi sont positionnés dans la zone de couverture du point d'accès LiFi, de sorte qu'une communication s'établit entre le point d'accès LiFi et le *dongle* LiFi. L'ordinateur est ainsi connecté à un réseau via le *dongle* LiFi et le point d'accès LiFi.

La mise en réseau de l'ordinateur grâce à la technologie de la communication optique sans fil présente de nombreux avantages par rapport aux communications radiofréquences traditionnelles. On peut citer par exemple le débit élevé et la faible latence que cette technologie permet d'atteindre, la disponibilité de la bande passante, la réduction des risques liés aux ondes électromagnétiques, la réduction des risques de piratage, etc.

On envisage, pour améliorer la portée et la qualité de la communication optique sans fil, d'augmenter l'intensité lumineuse (par exemple infrarouge) produite par le point d'accès Li-Fi et par le *dongle Li-Fi.*

L'augmentation de l'intensité lumineuse soulève cependant deux problèmes.

Un premier problème concerne la consommation électrique du *dongle Li-Fi,* qui doit demeurer la plus faible possible. Il convient à minima de respecter les capacités d'alimentation du standard de connectique utilisé, par exemple de l'USB2.0. Si le courant tiré ou la tension requise sont trop importants, le *dongle Li-Fi* ne peut être branché sur l'ordinateur. Il est par ailleurs souhaitable de réduire autant que possible la consommation par le *dongle* LiFi de l'énergie stockée dans la batterie de l'ordinateur. Il est aussi préférable de limiter l'échauffement du *dongle* LiFi.

Un deuxième problème concerne la sécurité oculaire des utilisateurs. Il est fondamental, malgré l'augmentation de l'intensité lumineuse, que les yeux de l'utilisateur soient protégés même si celui-ci approche son visage à proximité du point d'accès Li-Fi ou du *dongle* LiFi. Le document de l'état de l'art WO 2018/086842 décrit un point d'accès de type Li-Fi disposant d'un interrupteur pour permettre la mesure d'une tension de diode à intervalles réguliers.

### OBJET DE L'INVENTION

L'invention a pour objet de limiter la consommation électrique d'un dispositif de communication optique sans fil et d'assurer la protection oculaire des utilisateurs.

### RESUME DE L'INVENTION

En vue de la réalisation de ce but, on propose un point d'accès comprenant un dispositif de communication optique sans fil comportant :
- un composant de traitement agencé pour produire au cours de périodes d'émission des signaux numériques émis ;
- un convertisseur numérique analogique agencé pour produire des signaux analogiques émis à partir des signaux numériques émis ;
- une source lumineuse agencée pour produire à partir des signaux analogiques émis des signaux lumineux émis ;
- un circuit de coupure agencé pour sélectivement activer ou désactiver la source lumineuse ;
le composant de traitement comprenant une sortie binaire et étant agencé pour produire et appliquer sur la sortie binaire un signal binaire de commande qui se trouve dans un premier état au cours des périodes d'émission et dans un deuxième état hors des périodes d'émission, le circuit de coupure étant agencé pour acquérir le signal binaire de commande, et pour activer la source lumineuse lorsque le signal binaire de commande se trouve dans le premier état et pour désactiver la source lumineuse lorsque le signal binaire de commande se trouve dans le deuxième état. Le composant de traitement est par ailleurs agencé pour émettre, au cours de cycles de recherche, des signaux numériques émis contenant des trames de recherche de périphériques susceptibles d'être connectés au point d'accès, et en ce que chaque cycle de recherche comprend au moins une période d'émission et au moins une période de silence, une somme des périodes de silence étant au moins 10 fois plus longue qu'une somme des périodes d'émission, de sorte qu'au cours d'un cycle de recherche, le signal binaire de commande se trouve dans le premier état pendant une première durée au moins 10 fois plus courte qu'une deuxième durée pendant laquelle le signal binaire de commande se trouve dans le deuxième état.

Le circuit de coupure, commandé par le signal binaire de commande, permet de désactiver la source lumineuse (c'est-à-dire de l'éteindre) hors des périodes d'émission, de sorte que celle-ci ne consomme de l'énergie électrique que lorsque le dispositif de communication optique sans fil selon l'invention doit émettre des signaux numériques émis. On réduit ainsi de manière importante la consommation électrique du dispositif de communication optique sans fil.

Lorsqu'un obstacle, par exemple le visage d'un utilisateur, se trouve à proximité du dispositif de communication optique sans fil, cet obstacle coupe la communication ce qui, classiquement, dans le cas d'un *dongle,* empêche celui d'émettre des signaux numériques émis et, dans le cas d'un point d'accès, empêche celui d'émettre des signaux numériques émis à l'exception de trames de recherche de périphériques qui comprennent des impulsions courtes et espacées. Dans les deux cas, la sécurité oculaire de l'utilisateur n'est pas menacée.

On propose de plus un dispositif de communication tel que celui qui vient d'être décrit, dans lequel le composant de traitement est un modem en bande de base.

On propose aussi un dispositif de communication tel que celui qui vient d'être décrit, dans lequel le modem en bande de base est un circuit intégré conçu pour respecter la norme *G.hn* (ITU G.9960/ITU G.9961/ ITU G.9963/ ITU G.9964).

On propose de plus un dispositif de communication tel que celui qui vient d'être décrit, dans lequel la sortie binaire est une sortie de type GPO (*General Purpose Output*).

On propose de plus un dispositif de communication tel que celui qui vient d'être décrit, dans lequel le circuit de coupure comporte un transistor formant un interrupteur commandé par le signal binaire de commande, et dans lequel la source lumineuse comporte une borne reliée à une source d'une tension de polarisation et une borne reliée à une masse électrique via le transistor.

### BREVE DESCRIPTION DES DESSINS

Il sera fait référence aux dessins annexés, parmi lesquels :
[Fig. 1] la figure 1 représente un point d'accès LiFi et un *dongle* LiFi qui intègrent chacun un dispositif de communication optique sans fil selon l'invention ;
[Fig. 2] la figure 2 représente l'architecture du point d'accès Li-Fi ;
[Fig. 3] la figure 3 est une vue en perspective et de dessous du point d'accès Li-Fi ;
[Fig. 4] la figure 4 représente l'architecture du *dongle* LiFi ;
[Fig. 5] la figure 5 est une vue en perspective et de dessus du *dongle* Li-Fi connecté à un ordinateur ;
[Fig. 6] la figure 6 représente un signal binaire de commande associé à l'émission de trames de données ;
[Fig. 7] la figure 7 représente un circuit de coupure du dispositif de communication optique sans fil selon l'invention ;
[Fig. 8] la figure 8 représente un signal binaire de commande associé à l'émission de trames de recherche de périphériques.

### DESCRIPTION DETAILLEE DE L'INVENTION

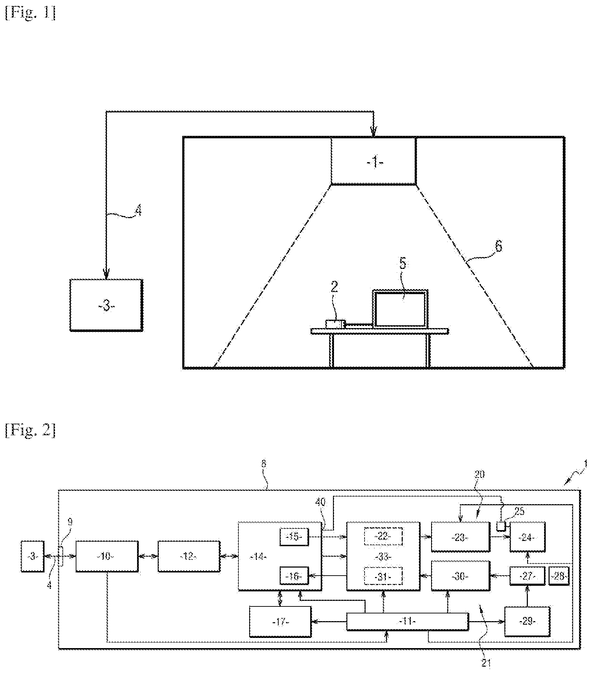

En référence à la figure 1, un point d'accès LiFi 1, intégrant un dispositif de communication optique sans fil selon l'invention, et un *dongle* LiFi 2, intégrant lui aussi un dispositif de communication optique sans fil selon l'invention, sont situés dans une pièce d'une habitation d'un bâtiment.

Le point d'accès LiFi 1 est fixé au plafond de la pièce par un mécanisme semblable à un mécanisme de fixation de détecteur de fumée, ou bien directement par encastrement. Le point d'accès LiFi 1 est connecté à un réseau PoE 3 (pour *Power over Ethernet*) du bâtiment via un câble RJ45 4. Le réseau PoE 3 alimente aussi un téléphone équipant l'habitation.

Le *dongle* LiFi 2 est connecté à un ordinateur 5 en USB (A ou C). L'ordinateur 5 et le *dongle* LiFi 2 sont positionnés sous le cône d'émission 6 du point d'accès LiFi 1, de sorte qu'une communication s'établit entre le point d'accès LiFi 1 et le *dongle* LiFi 2. L'ordinateur 5 est ainsi connecté à un réseau via le *dongle* LiFi 2 et le point d'accès LiFi 1.

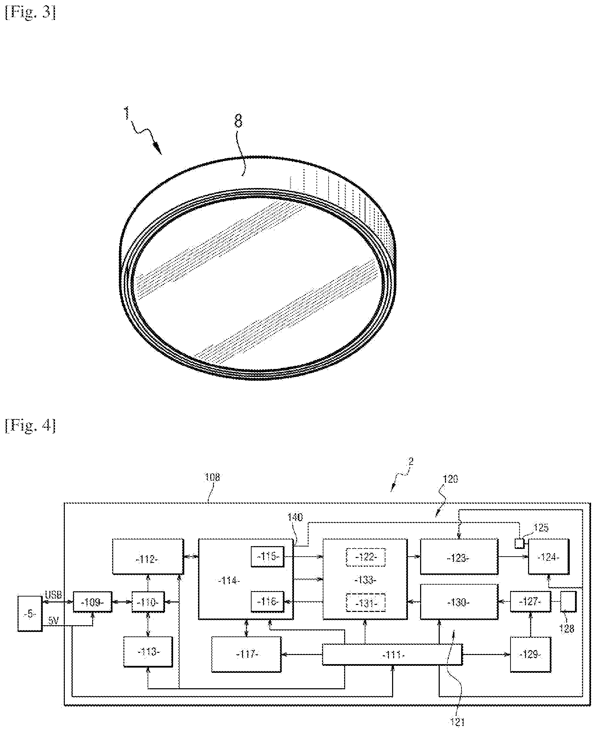

En référence aux figures 2 et 3, le point d'accès LiFi 1 comporte un boîtier 8 dans lequel sont intégrés des premiers composants.

Les premiers composants comprennent tout d'abord un connecteur RJ45 femelle 9 permettant la connexion du point d'accès LiFi 1 au câble RJ45 4.

Les premiers composants comprennent de plus un séparateur PoE 10. Le séparateur PoE 10 acquiert des signaux entrants contenant des signaux numériques entrants, qui sont des signaux Ethernet, combinés avec une tension d'alimentation continue primaire (ici égale à 5V), et sépare les signaux numériques entrants et la tension d'alimentation continue primaire.

Les premiers composants comprennent aussi un convertisseur DC-DC 11. La tension d'alimentation continue primaire est transformée par le convertisseur DC-DC 11 en une tension d'alimentation continue secondaire utilisée pour alimenter les premiers composants du point d'accès LiFi 1.

On note que le connecteur RJ45 femelle 9, le séparateur PoE 10 et le convertisseur DC-DC 11 forment une interface unique de données et de puissance permettant de connecter le point d'accès LiFi 1 en « *Plug and Play »* sur le réseau PoE 3.

Les premiers composants comprennent de plus un émetteur-récepteur Ethernet 12 et un composant de traitement, qui est en l'occurrence un modem en bande de base 14.

L'émetteur-récepteur Ethernet 12 acquiert les signaux numériques entrants et les met en forme pour les rendre compatibles avec un format accepté par le modem en bande de base 14. De même, l'émetteur-récepteur Ethernet 12 acquiert des signaux numériques sortants produits par le modem en bande de base 14 et les transforme pour les rendre compatibles avec le protocole Ethernet.

Le modem en bande de base 14 est ici un circuit intégré pris sur étagère (ou COTS, pour *Component Off-The-Shelf*) et conçu à l'origine pour respecter la norme de télécommunication G.hn (ITU G.9960/ITU G.9961/ ITU G.9963/ ITU G.9964). Le modem en bande de base 14 intègre un convertisseur numérique analogique 15 et un convertisseur analogique numérique 16.

Le modem en bande de base 14 génère des signaux numériques émis qui sont appliqués en entrée du convertisseur numérique analogique 15, qui les convertit en signaux analogiques émis appliqués sur une sortie du modem en bande de base 14. De même, le modem en bande de base 14 reçoit des signaux analogiques reçus qui sont appliqués sur une entrée du convertisseur analogique numérique 16. Le convertisseur analogique numérique 16 convertit les signaux analogiques reçus en signaux numériques reçus.

Les premiers composants comprennent aussi une mémoire *flash* 17 pour stocker et charger les différents logiciels programmés dans le modem en bande de base 14.

Les premiers composants comprennent en outre une voie d'émission 20 et une voie de réception 21.

La voie d'émission 20 comporte un premier étage d'amplification 22, un deuxième étage d'amplification 23, une source lumineuse 24 et un circuit de coupure 25.

Le premier étage d'amplification 22 présente un gain adaptable, qui est ajusté en fonction de la source lumineuse 24.

Le deuxième étage d'amplification 23 comprend un amplificateur pour augmenter la puissance des signaux analogiques émis. L'amplificateur est par exemple un amplificateur de classe A, ou bien un *driver* de ligne. Le deuxième étage d'amplification 23 comporte de plus un module de pré-égalisation comprenant par exemple un réseau RC ou RLC.

La source lumineuse 24 comprend ici une diode électroluminescente infrarouge (LED IR 24).

La voie de réception 21 comporte un photorécepteur 27, un concentrateur 28, un module de réglage de tension 29, un premier étage d'amplification 30 et un deuxième étage d'amplification 31.

Le photorécepteur 27 comporte ici une photodiode PIN 27 qui réalise une conversion optoélectronique. La photodiode PIN 27 est polarisée par le module de réglage de tension 29 pour augmenter la bande passante.

Le concentrateur 28 est monté sur la photodiode PIN 27 et permet d'augmenter le flux optique collecté et la couverture en réception du point d'accès LiFi 1.

Le premier étage d'amplification 30 comporte un module de pré-amplification comprenant un amplificateur de crête pour augmenter la bande passante.

On note ici que, dans le cas où l'on utiliserait non pas une mais plusieurs photodiodes PIN montées en parallèle, on pourrait prévoir d'utiliser un seul module de pré-amplification relié aux photodiodes PIN. On pourrait aussi prévoir d'utiliser un module de pré-amplification par photodiode PIN, puis de sommer les signaux analogiques reçus résultants, ce qui permet d'augmenter la surface sensible.

Le deuxième étage d'amplification 31 présente un gain variable en fonction de l'état du canal. Le gain variable est commandé par le modem en bande de base 14.

Le premier étage d'amplification 22 de la voie d'émission 20 et le deuxième étage d'amplification 31 de la voie de réception 21 sont intégrés dans un même composant 33 qui est un circuit frontal analogique. Le composant 33 est ici un composant pris sur étagère.

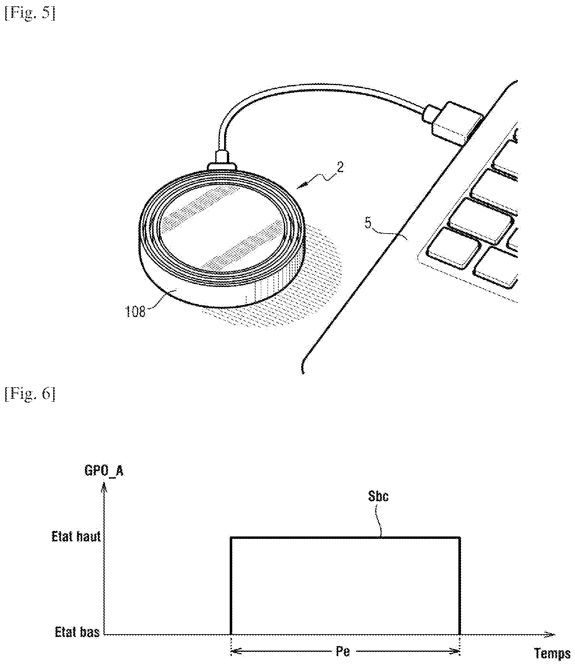

En référence aux figures 4 et 5, l'architecture du *dongle* LiFi 2 est très proche de celle du point d'accès LiFi 1.

Le *dongle* LiFi 2 comporte un boîtier 108 dans lequel sont intégrés des deuxièmes composants.

Les deuxièmes composants comprennent ainsi un convertisseur DC-DC 111, un émetteur-récepteur Ethernet 112, un modem en bande de base 114 comprenant un convertisseur numérique analogique 115 et un convertisseur analogique numérique 116, et une première mémoire *flash* 117.

Les deuxièmes composants comprennent en outre une voie d'émission 120 et une voie de réception 121.

La voie d'émission 120 comporte un premier étage d'amplification 122, un deuxième étage d'amplification 123, une LED IR 124 et un circuit de coupure 125.

La voie de réception 121 comporte une photodiode PIN 127, un concentrateur 128, un module de réglage de tension 129, un premier étage d'amplification 130 et un deuxième étage d'amplification 131. Le premier étage d'amplification 122 de la voie d'émission 120 et le deuxième étage d'amplification 131 de la voie de réception 121 sont intégrés dans un même composant 133 qui est un composant pris sur étagère.

Les deuxièmes composants du *dongle* LiFi 2 qui viennent d'être cités sont semblables aux premiers composants équivalents du point d'accès LiFi 1, et fonctionnent sensiblement de la même manière.

Le *dongle* LiFi 2 diffère principalement du point d'accès LiFi 1 au niveau *hardware* (matériel) en ce qu'il comporte, à la place du connecteur RJ45 femelle 9 et du séparateur PoE 10, un port USB 109, en l'occurrence un port USB-C femelle, un composant LAN 110 (pour *Local Area Network*) et une deuxième mémoire *flash* 113.

Le *dongle* LiFi 2 reçoit de l'ordinateur 5 via le port USB 109 une tension d'alimentation continue de 5V ainsi que des signaux numériques entrants, et émet des signaux numériques sortants.

La deuxième mémoire flash 113 est alimentée par le convertisseur DC-DC 111 et est reliée au composant LAN 110 et à l'émetteur-récepteur Ethernet 112.

Le port USB 109 et le composant LAN 110 permettent de connecter le *dongle* LiFi 2 en *« Plug and Play »* sur un périphérique ayant un port USB A ou C, tel que l'ordinateur 5.

On décrit maintenant plus en détail le rôle du circuit de coupure 25 dans le point d'accès LiFi 1. Le rôle du circuit de coupure 125 dans le *dongle* Li-Fi 2 n'est pas décrit car identique.

Le modem en bande de base 14 produit des signaux numériques émis contenant des trames de signal (notamment des trames de données) que le point d'accès LiFi 1 envoie au *dongle* LiFi 2.

Le convertisseur numérique analogique 15 du modem en bande de base 14 produit des signaux analogiques émis à partir des signaux numériques émis.

Les signaux analogiques émis sont mis en forme par le premier étage d'amplification 22 et par le deuxième étage d'amplification 23 de la voie d'émission 20, puis sont transmis à la LED IR 24 qui produit des signaux lumineux émis comprenant les trames de signal.

Le modem en bande de base 14 comporte une sortie GPO_A (GPO pour *General Purpose Output*) 40 qui est une sortie binaire (tout comme le modem en bande de base 114 qui comporte une sortie GPO_A 140).

En référence à la figure 6, le modem en bande base 14 produit et applique sur la sortie GPO_A 40 un signal binaire de commande Sbc qui se trouve dans un premier état au cours des périodes d'émission Pe par le modem en bande de base 14 de signaux numériques émis, et dans un deuxième état hors des périodes d'émission des signaux numériques émis.

Ici, le premier état est un état haut et le deuxième état est un état bas.

La sortie GPO_A 40 permet de distinguer simplement les périodes d'émission au cours desquelles la LED IR 24 est censée émettre des signaux lumineux émis contenant les trames de signal, et les périodes au cours desquelles la LED IR 24 n'est pas censée émettre de tels signaux lumineux émis.

On note que cette configuration de la sortie GPO_A 40 est programmée « de base », par défaut, dans le modem en bande de base 14 qui, rappelons-le, est un composant pris sur étagère.

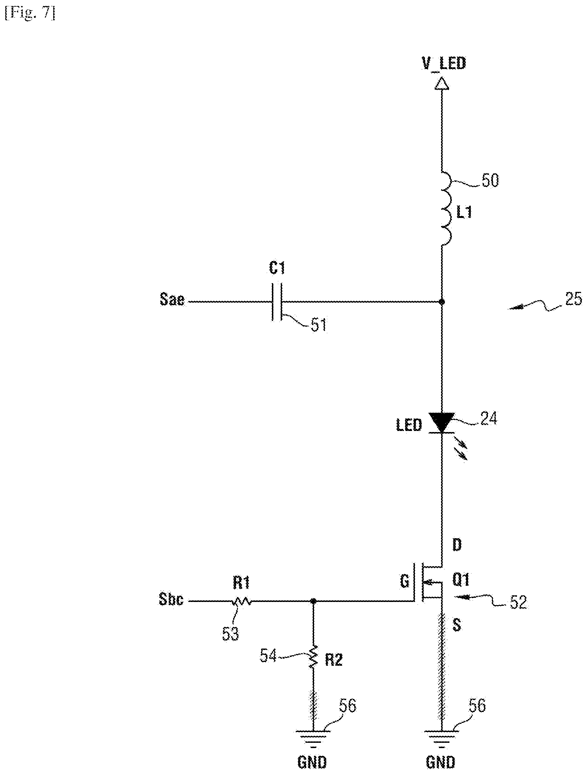

En référence à la figure 7, le circuit de détection 25 est relié à la LED IR 24.

Le circuit de détection 25 comprend une inductance 50, un condensateur 51, un transistor MOSFET de type N 52, une première résistance 53 et une deuxième résistance 54.

L'inductance 50 est montée entre une source d'une tension de polarisation V_LED de la LED IR 24 et une anode de la LED IR 24. Le condensateur 51 a une borne reliée à l'anode de la LED IR 24. Les signaux analogiques émis Sae sont appliqués sur la borne du condensateur 51 qui n'est pas reliée à l'anode de la LED IR 24. La cathode de la LED IR 24 est reliée à la masse électrique 56 via le transistor 52. Plus précisément, la cathode de la LED IR 24 est connectée au drain D du transistor 52 et la masse électrique 56 à la source S du transistor 52.

L'inductance 50 permet d'éviter que les signaux analogiques émis Sae ne remontent vers la source de la tension de polarisation V_LED.

La première résistance 53 est une résistance de grille du transistor 52, et a une borne reliée à la grille G du transistor 52. Le signal binaire de commande Sbc est appliqué sur l'autre borne de la première résistance 53. La deuxième résistance 54 a une borne reliée à la grille G du transistor 52 et une borne reliée à la masse électrique 56. La deuxième résistance 54 est une résistance de *pull-down* qui permet d'éviter des états intermédiaires de tension sur la grille G du transistor 52.

Le circuit de coupure 25 permet d'activer (c'est-à-dire d'allumer) la LED IR 24 lors des périodes d'émission, et de désactiver (c'est-à-dire d'éteindre) la LED IR 24 hors des périodes d'émission.

On suppose tout d'abord que la sortie GPO_A 40 du modem en bande de base 14 n'est pas utilisée et que la partie inférieure du circuit de coupure 25 n'est pas montée : la cathode de la LED IR 24 est alors connectée directement à la masse électrique 56. Dans ce cas, si un signal analogique émis Sae est appliqué sur le condensateur 51, celui-ci vient s'additionner à la tension de polarisation V_LED de la LED IR 24. La LED IR 24 transmet donc des signaux lumineux émis correspondant à cette somme de signaux électriques. Dans le cas où aucun signal analogique émis Sae n'est appliqué sur le condensateur 51, la LED IR 24 émet malgré tout un signal lumineux émis constant, ne contenant pas de trames de signal, correspondant à la tension de polarisation V_LED de la LED IR 24. La LED IR 24 est donc constamment alimentée et consomme ainsi de l'énergie en permanence.

Lorsque le circuit de coupure 25 est utilisé, au contraire, la LED IR 24 est activée pendant les périodes d'émission et coupée hors des périodes d'émission grâce au signal binaire de commande Sbc qui contrôle le transistor 52 qui se comporte comme un interrupteur.

Lorsque le signal binaire de commande Sbc se trouve dans le premier état, c'est-à-dire dans l'état haut, cet état haut est appliqué sur la grille G du transistor 52 qui fonctionne alors en mode saturé, ce qui permet la création d'un canal de conduction entre le drain D et la source S du transistor 52. La cathode de la LED IR 24 est alors mise à la masse électrique 56, ce qui permet son alimentation par la somme de la tension de polarisation continue V_LED et des signaux analogiques émis Sae.

Au contraire, lorsque le signal binaire de commande Sbc se trouve dans le deuxième état, c'est à dire dans l'état bas (hors périodes d'émission), cet état bas est appliqué sur la grille G du transistor 52 qui se trouve dans un mode bloqué. La cathode de la LED IR 24 n'est pas mise à la masse électrique 56, de sorte que la LED IR 24 n'est alimentée par aucun signal.

La LED IR 24 consomme donc de l'énergie électrique uniquement lorsqu'elle émet des signaux lumineux émis contenant des trames de signal, c'est-à-dire lorsque le point d'accès LiFi 1 transmet les trames de signal.

Le circuit de coupure 25 et le circuit de coupure 125 permettent donc de réduire de manière importante la consommation électrique respectivement du point d'accès LiFi 1 et du *dongle* LiFi 2.

Le circuit de coupure permet aussi d'assurer la sécurité oculaire des utilisateurs. Le circuit de coupure protège les yeux d'un utilisateur lorsque celui-ci approche son visage du point d'accès LiFi 1 ou du *dongle* LiFi 2.

De manière générale, si un obstacle apparaît entre le point d'accès LiFi 1 et le *dongle* LiFi 2, alors la communication est rompue. Le rétablissement de la communication ne peut se faire qu'à l'initiative du point d'accès LiFi 1, via l'émission au cours de cycles de recherche, par le modem en bande de base 14, de signaux numériques émis contenant des trames de recherche de périphériques susceptibles d'être connectés au point d'accès LiFi 1. Les signaux numériques émis comprenant les trames de recherche de périphériques sont transformés en signaux analogiques émis puis en signaux lumineux émis.

Si ces signaux lumineux émis sont reçus par un périphérique, par exemple par le dongle LiFi 2, alors celui-ci émet des signaux lumineux émis en retour qui contiennent une trame de données de connexion validant sa présence. Sinon, le cycle de recherche est répété.

Chaque cycle de recherche comprend au moins une période d'émission et au moins une période de silence, la somme des périodes de silence étant au moins 10 fois plus longue que la somme des périodes d'émission, de sorte qu'au cours d'un cycle de recherche, le signal binaire de commande prend la première valeur pendant une première durée au moins 10 fois plus courte qu'une deuxième durée pendant laquelle le signal binaire de commande prend la deuxième valeur.

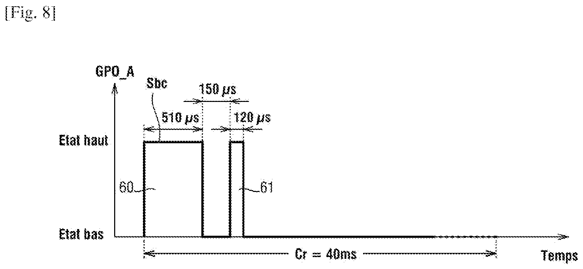

On voit sur la figure 8 un exemple de signal binaire de commande Sbc associé à une trame de recherche de périphériques. La durée du cycle de recherche Cr est égale à 40ms. Le signal binaire de commande Sbc comprend deux impulsions courtes comprenant une première impulsion 60 (correspondant à une première période d'émission) ayant une durée égale à 510µs et une deuxième impulsion 61 (correspondant à une deuxième période d'émission) ayant une durée égale à 120µs, la première impulsion 60 et la deuxième impulsion 61 étant espacées d'une durée égale à 150µs.

Suite à la coupure de la communication, le *dongle* LiFi 2, de par sa configuration *firmware,* enverra à nouveau des signaux lumineux émis uniquement si la communication est rétablie à l'initiative du point d'accès LiFi 1 via l'émission des signaux lumineux émis comprenant les trames de recherche de périphériques. Tant que ces signaux lumineux émis ne sont reçus et décodés par le *dongle* LiFi 2, celui-ci reste « silencieux ».

Ainsi, à partir du moment où la communication est rompue, la LED IR 124 du *dongle* LiFi 2 est désactivée. Si l'obstacle qui rompt la communication est un utilisateur qui regarde de près le dongle LiFi 2, cet utilisateur ne court pas de risque oculaire puisque la LED IR 124 du dongle LiFi 2 est coupée et demeure coupée tant que l'utilisateur est positionné à proximité du dongle LiFi 2.

Si la communication est coupée à cause de la présence du visage d'un utilisateur, le point d'accès LiFi 1, quant à lui, va continuer à chercher la présence de périphériques en émettant des signaux lumineux émis contenant les trames de recherche de périphériques. Cependant, même si le visage de l'utilisateur se trouve à proximité du point d'accès LiFi 1, malgré l'émission de ces signaux lumineux émis, la sécurité oculaire de l'utilisateur est assurée car, dans chaque cycle de recherche Cr, la première impulsion 60 et la deuxième impulsion 61 ont une durée très courte et sont suivies d'une longue période de « silence ».

On note ici que le déploiement massif d'une technologie de communication sans fil repose largement sur la miniaturisation des composants électroniques utilisés pour l'implémenter. Par exemple, la fonction WiFi peut être réalisée avec deux composants principaux conçus pour prendre peu de place et consommer peu d'énergie. Dans le cas du LiFi, ces composants miniaturisés n'existent pas encore. On utilise donc des composants électroniques discrets pris sur étagère, qui ne sont pas initialement conçus pour un tel cas d'usage. L'assemblage de ces composants permet certes de réaliser les fonctions voulues mais pour un encombrement, un prix et une consommation d'énergie supérieurs à ce qui peut être obtenu avec des composants miniaturisés. L'invention permet au moins de régler le problème de la consommation.

Bien entendu, l'invention n'est pas limitée au mode de réalisation décrit mais englobe toute variante entrant dans le champ de l'invention telle que définie par les revendications.

La communication optique sans fil mise en oeuvre n'est pas forcément une communication selon le protocole LiFi.

On a indiqué ici que la source lumineuse comprend une LED. La source lumineuse pourrait être différente et par exemple comprendre une LED à cavité résonnante ou un VCSEL (pour *vertical-cavity surface-emitting-laser,* c'est-à-dire diode laser à cavité verticale émettant par la surface). La source lumineuse peut comprendre plusieurs composants similaires, par exemple plusieurs LEDs, ou bien plusieurs composants différents, par exemple une ou plusieurs LEDs et un ou plusieurs VCSELs.

Dans le cas où la source lumineuse comprend plusieurs LEDs, celles-ci peuvent être montées en série ou en parallèle. Dans ce cas, le circuit de coupure de la figure 7 est le même, la LED IR 24 étant remplacée par les LEDs montées en série ou en parallèle.

De même, le photorécepteur pourrait être différent et comprendre une ou plusieurs photodiodes PIN, une ou plusieurs photodiodes à avalanche ou bien une diode à avalanche à photon unique ou une matrice de diodes à avalanche à photon unique.

On a décrit ici l'utilisation d'un modem en bande de base, mais il est possible d'utiliser un composant de traitement différent : processeur, microcontrôleur, FPGA, etc. Le convertisseur analogique numérique et le convertisseur numérique analogique ne sont pas nécessairement intégrés dans le composant de traitement.

On a décrit ici que le dispositif de communication optique sans fil est intégré dans un point d'accès positionné au plafond d'une pièce. L'architecture du point d'accès peut être différente de celle présentée ici.

Le modem en bande de base ainsi que les étages d'amplification pourraient par exemple être « centralisés » et situés dans un même équipement central relié à une pluralité d'antennes photoniques (comprenant les LEDs et les photodiodes) positionnées au plafond d'une même pièce ou de pièces différentes. Les antennes photoniques sont reliées à l'équipement central par un ou des câbles comprenant par exemple un câble coaxial, un câble d'alimentation, un câble téléphonique, une fibre plastique, etc. Dans cette architecture, le dispositif de communication optique sans fil selon l'invention est donc intégré dans plusieurs équipements.

L'équipement périphérique qui communique avec le point d'accès et dans lequel est intégré le dispositif de communication optique sans fil n'est pas nécessairement un *dongle* mais pourrait être un équipement quelconque adapté à communiquer via une communication optique sans fil : ordinateur, tablette, smartphone, montre connectée, enceinte connectée, etc.

Dans le cas où le dispositif de communication optique sans fil est intégré dans un *dongle,* celui-ci n'est pas nécessairement relié à un ordinateur mais peut être relié à un autre équipement : tablette, *smartphone,* montre connectée, enceinte connectée, etc.

On note que l'invention peut être mise en oeuvre dans tout type d'application : réseau domestique, réseau industriel, robotique, à l'intérieur d'une voiture, d'un train, d'un avion, etc.

## Revendications

1. Point d'accès (1) comprenant un dispositif de communication optique sans fil comportant :
- un composant de traitement (14 ; 114) agencé pour produire au cours de périodes d'émission (Pe) des signaux numériques émis ;
- un convertisseur numérique analogique (15 ; 115) agencé pour produire des signaux analogiques émis à partir des signaux numériques émis ;
- une source lumineuse (24 ; 124) agencée pour produire à partir des signaux analogiques émis des signaux lumineux émis ;
- un circuit de coupure (25 ; 125) agencé pour sélectivement activer ou désactiver la source lumineuse ;
**caractérisé en ce que** le composant de traitement comprend une sortie binaire (40 ; 140) et est agencé pour produire et appliquer sur la sortie binaire un signal binaire de commande (Sbc) qui se trouve dans un premier état au cours des périodes d'émission et dans un deuxième état hors des périodes d'émission, le circuit de coupure étant agencé pour acquérir le signal binaire de commande, et pour activer la source lumineuse lorsque le signal binaire de commande se trouve dans le premier état et pour désactiver la source lumineuse lorsque le signal binaire de commande se trouve dans le deuxième état,
**en ce que** le composant de traitement (14) est agencé pour émettre, au cours de cycles de recherche, des signaux numériques émis contenant des trames de recherche de périphériques susceptibles d'être connectés au point d'accès,
et **en ce que** chaque cycle de recherche comprend au moins une période d'émission et au moins une période de silence, une somme des périodes de silence étant au moins 10 fois plus longue qu'une somme des périodes d'émission, de sorte qu'au cours d'un cycle de recherche, le signal binaire de commande se trouve dans le premier état pendant une première durée au moins 10 fois plus courte qu'une deuxième durée pendant laquelle le signal binaire de commande se trouve dans le deuxième état.

2. Point d'accès (1) selon la revendication 1, dans lequel le composant de traitement est un modem en bande de base (14 ; 114).

3. Point d'accès (1) selon la revendication 2, dans lequel le modem en bande de base est un circuit intégré pris sur étagère et conçu à l'origine pour respecter une norme de télécommunication.

4. Point d'accès (1) selon l'une quelconque des revendications 1 à 3, dans lequel la sortie binaire est une sortie de type GPO, pour « *General Purpose Output* » en anglais.

5. Point d'accès (1) selon l'une quelconque des revendications 1 à 4, dans lequel le circuit de coupure comporte un transistor (52) formant un interrupteur commandé par le signal binaire de commande, et dans lequel la source lumineuse comporte une borne reliée à une source d'une tension de polarisation (V_LED) et une borne reliée à une masse électrique (56) via le transistor (52).

## Patentansprüche

1. Zugangspunkt (1), der eine drahtlose optische Kommunikationsvorrichtung umfasst, welche umfasst:
- eine Verarbeitungskomponente (14; 114), die so eingerichtet ist, dass sie während Sendeperioden (Pe) gesendete digitale Signale erzeugt;
- einen Digital-Analog-Wandler (15; 115), der so eingerichtet ist, dass er aus den gesendeten digitalen Signalen gesendete analoge Signale erzeugt;
- eine Lichtquelle (24; 124), die so eingerichtet ist, dass sie aus den gesendeten analogen Signalen gesendete Lichtsignale erzeugt;
- eine Unterbrechungsschaltung (25; 125), die so eingerichtet ist, dass sie die Lichtquelle selektiv aktiviert oder deaktiviert;
**dadurch gekennzeichnet, dass** die Verarbeitungskomponente einen binären Ausgang (40; 140) umfasst und so eingerichtet ist, dass sie ein binäres Steuersignal (Sbc) erzeugt, das sich während der Sendeperioden in einem ersten Zustand und außerhalb der Sendeperioden in einem zweiten Zustand befindet, und an den binären Ausgang anlegt, wobei die Unterbrechungsschaltung so eingerichtet ist, dass sie das binäre Steuersignal erfasst und die Lichtquelle aktiviert, wenn sich das binäre Steuersignal im ersten Zustand befindet, und die Lichtquelle deaktiviert, wenn sich das binäre Steuersignal im zweiten Zustand befindet,
dadurch, dass die Verarbeitungskomponente (14) so eingerichtet ist, dass sie während Suchzyklen gesendete digitale Signale sendet, die Suchrahmen von Peripheriegeräten, welche mit dem Zugangspunkt verbunden werden können, enthalten,
und dadurch, dass jeder Suchzyklus mindestens eine Sendeperiode und mindestens eine Ruheperiode umfasst, wobei eine Summe der Ruheperioden mindestens 10-mal länger ist als eine Summe der Sendeperioden, sodass sich das binäre Steuersignal während eines Suchzyklus während einer ersten Dauer, die mindestens 10-mal kürzer ist als eine zweite Dauer, während der sich das binäre Steuersignal im zweiten Zustand befindet, im ersten Zustand befindet.

2. Zugangspunkt (1) nach Anspruch 1, wobei die Verarbeitungskomponente ein Basisbandmodem (14; 114) ist.

3. Zugangspunkt (1) nach Anspruch 2, wobei das Basisbandmodem eine integrierte Schaltung von der Stange ist und ursprünglich so konzipiert wurde, dass es einen Telekommunikationsstandard erfüllt.

4. Zugangspunkt (1) nach einem der Ansprüche 1 bis 3, wobei der binäre Ausgang ein Ausgang vom Typ GPO, Englisch für "*General Purpose Output*"*,* ist.

5. Zugangspunkt (1) nach einem der Ansprüche 1 bis 4, wobei die Unterbrechungsschaltung einen Transistor (52) umfasst, der einen Schalter bildet, der durch das binäre Steuersignal gesteuert wird, und wobei die Lichtquelle eine Klemme, die an eine Quelle einer Vorspannung (V_LED) angeschlossen ist, und eine Klemme umfasst, die über den Transistor (52) an eine elektrische Masse (56) angeschlossen ist.

## Claims

1. An access point (1) comprising an optical wireless communication device including:
- a processing component (14; 114) arranged to produce transmitted digital signals during transmission periods (Pe) ;
- a digital-to-analog converter (15; 115) arranged to produce transmitted analog signals from the transmitted digital signals;
- a light source (24; 124) arranged to produce transmitted light signals from the transmitted analog signals;
- a shutdown circuit (25; 125) arranged to selectively activate or deactivate the light source;
**characterized in that** the processing component comprises a binary output (40; 140) and is arranged to generate and apply to the binary output a binary control signal (Sbc) which is in a first state during the transmission periods and in a second state outside the transmission periods, the shutdown circuit being arranged to receive the binary control signal, and to activate the light source when the binary control signal is in the first state and to deactivate the light source when the binary control signal is in the second state, **in that** the processing component (14) is arranged to transmit, during search cycles, transmitted digital signals containing search frames for searching peripherals that may be connected to the access point,
and **in that** each search cycle comprises at least one transmission period and at least one silence period, a sum of the silence periods being at least 10 times longer than a sum of the transmitting periods, so that during a search cycle, the binary control signal is in the first state for a first duration at least 10 times shorter than a second duration during which the binary control signal is in the second state.

2. The access point (1) as claimed in claim 1, wherein the processing component is a baseband modem (14; 114) .

3. The access point (1) as claimed in claim 2, wherein the baseband modem is an off-the-shelf integrated circuit originally designed to meet a telecommunications standard.

4. The access point (1) as claimed in any one of claims 1 to 3, wherein the binary output is a GPO output, for "General Purpose Output".

5. The access point (1) as claimed in any one of claims 1 to 4, wherein the shutdown circuit comprises a transistor (52) forming a switch controlled by the binary control signal, and wherein the light source comprises a terminal connected to a source of a bias voltage (V_LED) and a terminal connected to an electrical ground (56) via the transistor (52).
